# FASCICULE DE BREVET EUROPEEN

(11) **EP 2 544 288 B1**
(45) Date de publication et mention de la délivrance du brevet: **05.09.2018**
(21) Numéro de dépôt: 12187022.4
(22) Date de dépôt: 15.11.2005
(51) Int. Cl.: H01M 8/0444, H01M 8/04746, H01M 8/04791, H01M 8/04223, H01M 8/04119, H01M 8/04089, H01M 8/1018

(54) **Procédé pour alimenter en gaz oxygéné une cathode d'une pile à combustible et pile à combustible.**
Verfahren zur Versorgung einer Kathode einer Brennstoffzelle mit sauerstoffhaltigem Gas und entsprechende Brennstoffzelle
Method for supplying oxygen-containing gas to a cathode of a fuel cell and fuel cell.

(30) Priorité: 16.11.2004 FR 0412150
(43) Date de publication de la demande: 09.01.2013
(62) Demande divisionnaire de: 05292419.8
(73) Titulaire: NAVAL GROUP, 75015 Paris (FR)
(72) Inventeur: Clavier, Bruno, 44680 Sainte-Pazanne (FR)
(74) Mandataire: Lavoix

(56) Documents cités:
- DE-C1- 19 620 501
- JP-A- 63 207 053
- JP-A- 2004 022 487
- US-A- 4 859 545
- US-B1- 6 461 751

## Description

La présente invention est relative à un procédé pour alimenter en gaz oxygéné une cathode d'une pile à combustible du type à membrane échangeuse de protons, ainsi qu'à une pile à combustible ayant un circuit d'alimentation adapté en conséquence.

Les piles à combustible pour la production d'électricité alimentées en hydrogène et en air sont bien connues en elles-mêmes. Ces piles à combustible sont des dispositifs électrochimiques comportant notamment une membrane échangeuse de protons disposée entre des électrodes. L'une des faces de la membrane échangeuse de protons est alimentée en gaz oxygéné tel que de l'air, l'autre côté de la membrane échangeuse de protons est alimenté en gaz hydrogéné. L'hydrogène fournit des protons qui traversent la membrane et réagissent avec l'oxygène de l'air pour produire de l'eau. Cette réaction engendre une production d'électricité de telle sorte que le côté de la membrane alimenté en air constitue une cathode et le côté de la membrane alimenté en hydrogène constitue une anode. Une telle pile à combustible, qui consomme l'oxygène de l'air, produit de l'électricité et rejette de l'azote et de l'eau.

Dans le cas où de telles piles à combustible sont utilisées dans des ambiances confinées, la consommation d'air et le rejet d'azote peut poser des problèmes. C'est le cas, en particulier, lorsque ces piles sont utilisées dans des sous-marins ou pour certains équipements spatiaux. Pour de telles applications, le problème d'alimentation en air des piles pose un problème d'une part, parce que les réserves en air sont limitées, et d'autre part, notamment dans le cadre des applications sous-marines, parce que le rejet d'azote enrichit l'atmosphère en azote et donc l'appauvrit en oxygène. Cet appauvrissement en oxygène peut poser des problèmes, en particulier lorsque l'atmosphère est celle que doit respirer un équipage.

On a proposé d'alimenter ces piles à combustible par des réserves d'air comprimé stockées à proximité, mais ces solutions sont mal appropriées car très encombrantes et, en tout état de cause, rejettent de l'azote dans l'atmosphère ambiante.

Pour remédier à cet inconvénient, il a été proposé d'utiliser des piles alimentées par une réserve d'oxygène pur, ce qui a l'avantage de ne pas rejeter d'azote, et donc de ne pas enrichir en azote l'atmosphère confinée. Mais cette solution présente l'inconvénient de nécessiter l'utilisation de piles spécialement conçues pour fonctionner avec de l'oxygène pur, qui sont particulièrement coûteuses, et dont l'usure des membranes échangeuses de protons, destinées à fonctionner normalement en présence d'air et non pas d'oxygène pur, est très rapide.

Le document US 4 859 545 divulgue une pile à combustible qui est alimentée par un gaz oxygéné dont une fraction provient d'un circuit de recyclage des gaz effluents.

Le but de la présente invention est de proposer un moyen amélioré pour alimenter en gaz oxygéné des piles à combustible à membrane échangeuse de protons.

A cet effet, l'invention a pour objet une pile à combustible et un procédé conformes aux revendications.

En général, la pression du mélange d'alimentation de la cathode est supérieure à la pression du gaz effluent à la sortie de la cathode et, avant d'effectuer le mélange, on augmente la pression du gaz effluent pour obtenir du gaz effluent surpressé et on ajuste la pression d'alimentation en oxygène pour qu'elle soit sensiblement égale à celle du gaz effluent surpressé.

De préférence, on régule la teneur en oxygène du mélange d'alimentation en oxygène autour d'une consigne fonction de la puissance électrique fournie par la pile à combustible.

Pour réguler la teneur en oxygène du mélangeur d'alimentation de la cathode, on peut mesurer la teneur en oxygène du mélange d'alimentation de la cathode et ajuster la pression d'alimentation en oxygène et la pression du gaz effluent surpressé en fonction de l'écart entre la mesure de la teneur en oxygène et la consigne de teneur en oxygène du gaz d'alimentation de la cathode.

Le moyen pour comprimer le gaz effluent est par exemple un suppresseur pilotable, le moyen pour ajuster la pression d'alimentation en gaz oxygéné riche en oxygène est pilotable et, par exemple, est un détendeur pilotable. De préférence, un dispositif pour mesurer la teneur en oxygène du gaz d'alimentation de la cathode est disposé sur le circuit d'alimentation de la cathode en aval du point de jonction avec le circuit de gaz effluent recyclé.

Le dispositif de mesure de la teneur en oxygène, le moyen pour ajuster la pression d'alimentation en gaz oxygéné et le moyen pour comprimer le gaz effluent peuvent être reliés à un moyen de commande et de régulation.

La source de gaz oxygéné riche en oxygène est par exemple une source d'oxygène et la source de gaz neutre d'appoint est une source d'azote ou de dioxyde de carbone ou d'un mélange de ces deux gaz.

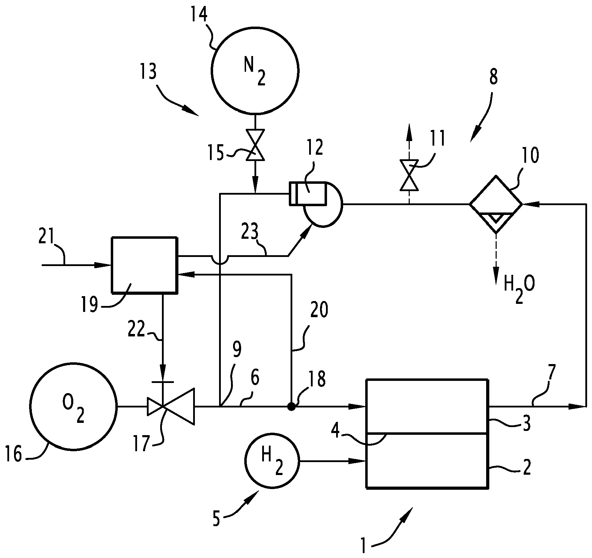

L'invention va maintenant être décrite de façon plus précise mais non limitative en regard de l'unique figure annexée qui représente de façon schématique un circuit d'alimentation en gaz oxygéné d'une pile à combustible à membrane échangeuse de protons.

Sur la figure, on a représenté de façon schématique une pile à combustible repérée généralement par 1 et constituée d'un compartiment anodique 2 et d'un compartiment cathodique 3 séparés par un électrolyte telle qu'une membrane échangeuse de protons 4. Le compartiment anodique 2 est alimenté en hydrogène ou en gaz hydrogéné par une source 5 d'un gaz de ce type. Le compartiment cathodique 3 est alimenté en gaz oxygéné par l'ensemble du circuit qui sera décrit ultérieurement.

On notera que, dans cette représentation schématique, la pile à combustible est constituée d'un compartiment anodique séparé d'un compartiment cathodique par une membrane échangeuse de protons. Mais une pile réelle est constituée en général d'une pluralité de cellules actives empilées qui sont constituées chacune d'un compartiment anodique et d'un compartiment cathodique séparés par une membrane échangeuse de protons. Ces cellules sont alimentées en parallèle d'une part par le gaz oxygéné, d'autre part par le gaz hydrogéné, et elles sont connectées électriquement en série.

Dans tout le texte, quand on parle de compartiment anodique ou de compartiment cathodique, on considère que cela représente l'ensemble des compartiments anodiques ou l'ensemble des compartiments cathodiques des cellules élémentaires d'une pile à combustible. Par souci de simplification les compartiments anodiques et cathodiques sont appelés également anode et cathode.

Le compartiment cathodique 3 est alimenté en gaz oxygéné par un circuit d'alimentation 6 en gaz oxygéné et rejette un effluent par un circuit d'évacuation 7 des effluents.

Le circuit d'évacuation 7 des effluents est prolongé par un circuit représenté généralement par 8 qui est un circuit de recyclage des effluents et qui rejoint le circuit d'alimentation en gaz oxygéné au point de jonction 9.

Le circuit de recyclage 8 comporte d'abord un dispositif 10 destiné à assécher le gaz effluent, ou plus exactement à évacuer l'essentiel de l'eau de réaction qui est contenu dans ce gaz effluent.

Ce dispositif de séparation eau/ gaz, est par exemple un condenseur ou un cyclone statique. Il comporte une purge pour l'évacuation de l'eau qui a été séparée.

En aval du dispositif de séparation d'eau, le circuit de recyclage 8 comporte un piquage muni d'une vanne 11 destinée à purger le circuit de recyclage.

Le circuit de recyclage comporte ensuite un surpresseur 12 destiné à augmenter la pression du gaz effluent.

En aval du supresseur le circuit de recyclage comporte un piquage destiné à réaliser une alimentation complémentaire en gaz neutre repérée généralement par 13. Ce moyen d'alimentation complémentaire 13 en gaz neutre est constitué d'un réservoir 14 de gaz neutre sous pression relié par l'intermédiaire d'une conduite comportant une vanne 15 au circuit de recyclage 8.

Le surpresseur est pilotable, ce qui signifie que sa vitesse de rotation peut être commandée de façon à régler la pression de sortie du gaz.

Le circuit d'alimentation en gaz oxygéné 6 est relié au point de jonction 9 à des moyens d'alimentation en gaz riche en oxygène, par l'intermédiaire d'un détendeur piloté 17. Ces moyens sont constitués par exemple d'une réserve 16 d'oxygène liquide ou d'un générateur d'oxygène alimenté en peroxyde d'hydrogène, ou d'une réserve d'oxygène gazeux sous haute pression. L'oxygène est délivré à une pression relativement élevée, par exemple voisine de 5 bars.

Afin de réguler le fonctionnement de la pile à combustible, le circuit d'alimentation en gaz oxygéné 6 comporte entre le point de jonction 9 avec le circuit de recyclage 8 du gaz effluent et l'entrée du compartiment cathodique 3, un dispositif 18 pour mesurer la teneur en oxygène du mélange gazeux alimentant le compartiment cathodique de la pile à combustible. Ce moyen de mesure de la teneur en oxygène est par exemple un oxygénomètre connu en lui-même. Il est relié à un module de commande et de régulation 19 par l'intermédiaire d'une liaison 20.

Le module de commande et de régulation 19 peut recevoir une consigne de puissance appelée 21, et il peut émettre des commandes par l'intermédiaire la liaison 22 vers le détendeur piloté 17 et par l'intermédiaire de la liaison 23 vers le surpresseur 12.

Le circuit de recyclage de gaz effluent transporte du gaz effluent dont la composition est définie essentiellement par la nature du gaz neutre qui peut être introduit dans le circuit. Ce gaz neutre contenu dans le réservoir 14 est par exemple de l'azote. Il peut également être du dioxyde carbone, ou un mélange de ces deux gaz ou encore un autre gaz neutre. Il peut être pur ou peut contenir des impuretés en quantité limitée.

En outre, le gaz effluent peut contenir de l'eau ou de la vapeur d'eau.

On va maintenant décrire le fonctionnement du circuit d'alimentation en gaz oxygéné des compartiments cathodiques de la pile à combustible.

D'une façon générale, le circuit qui vient d'être décrit a pour objet d'alimenter le compartiment cathodique en un gaz constitué d'oxygène dilué dans au moins 60% de gaz neutre, de façon à ne pas détériorer trop rapidement la membrane réactive. La teneur en oxygène du mélange doit cependant être suffisante pour que la pile puisse fonctionner.

Lorsque le gaz neutre est essentiellement de l'azote, le circuit d'alimentation a pour objet de reconstituer un gaz d'alimentation comparable à de l'air. Pour cela l'oxygène quasiment pur qui provient de la source d'oxygène 16 est mélangé au point de jonction 9 avec le gaz recyclé qui est essentiellement de l'azote, de façon à constituer un gaz mélangé constitué de 15 à 30% d'oxygène et du complément en azote.

Après passage dans la cellule réactive, l'oxygène, qui réagit avec les protons fournis par l'hydrogène pour former de l'eau, est consommé pour l'essentiel. De ce fait, le gaz effluent qui ressort contient principalement de l'azote, de l'eau sous forme de vapeur ou sous forme de liquide, et éventuellement un peu d'oxygène.

Ce gaz effluent qui circule dans le circuit de recyclage 8, lorsqu'il passe dans le dispositif de séparation d'eau 10, est asséché afin d'avoir une humidité relative de préférence inférieure à 100%. En effet, il est préférable que le gaz qui alimente le compartiment cathodique ne comporte pas trop d'eau, mais il est néanmoins souhaitable qu'il contienne un peu d'humidité favorable à une bonne longévité de la membrane échangeuse de protons.

Le gaz effluent qui ressort de la cellule réactive est en général à une pression voisine des 1 bar, soit la pression ambiante. Mais le gaz qui alimente cette cellule réactive doit être à une pression sensiblement supérieure de façon à compenser la perte de charge à la traversée de la cellule réactive.

Cette pression à l'entrée est par exemple de l'ordre de 1,5 bar, et peut varier entre un peu moins de 1,5 bar et un peu plus de 1,5 bar et par exemple entre 1,2 et 1,6 bar.

Cette surpression d'entrée est réalisée par le surpresseur 12 qui est destiné à comprimer le gaz effluent de façon à l'amener à la pression d'entrée dans la cellule réactive.

De même, la pression de l'oxygène doit être ajustée pour être sensiblement égale à la pression du gaz effluent recyclé en sortie du surpresseur. Cet ajustement des pressions est nécessaire pour qu'il ait un bon mélange des deux gaz et une bonne alimentation du compartiment cathodique. Cet ajustement de la pression d'oxygène est réalisé par le détendeur piloté 17 qui est alimenté en oxygène sous pression élevée par la source d'oxygène 16. La pression de l'oxygène en amont du détendeur est par exemple de 5 bars.

Le circuit d'alimentation en gaz de la cellule cathodique comportant un circuit fermé. De ce fait, le gaz contenu dans ce circuit peut s'enrichir en polluant gazeux divers et il peut être souhaitable de le renouveler de temps en temps. C'est pour cela qu'il est prévu un moyen de purge 11.

Ce moyen de purge est utilisé périodiquement pour vider partiellement ou totalement le circuit fermé et évacuer du gaz pollué de façon à pouvoir le remplacement à l'aide du dispositif d'appoint en gaz neutre 13 par du gaz neutre plus pur.

La fréquence avec laquelle le circuit doit être purgé est fonction du régime de fonctionnement, si bien que la purge est faite de façon discontinue sans que ce soit nécessairement à intervalles réguliers.

La puissance fournie par la pile est fonction de la quantité d'oxygène consommée par unité de temps, par conséquent du débit d'oxygène. La régulation de la puissance fournie par la pile se fait en régulant la teneur en oxygène du mélange gazeux d'alimentation du compartiment cathodique. Cette régulation de la teneur en oxygène du gaz d'alimentation qui peut varier de préférence entre 15% et 30%, se fait en utilisant le moyen de régulation 19 relié à la mesure de teneur en oxygène 18 du gaz d'alimentation.

Le principe est le suivant : un signal 21 représentatif de la puissance à fournir par la pile à combustible est envoyé au système de régulation 19 qui élabore une consigne de teneur en oxygène. Le système de régulation 19 compare cette consigne de teneur en oxygène à la teneur en oxygène mesurée à l'aide du moyen de mesure en oxygène 18, et en fonction de l'écart constaté, ajuste d'une part les conditions de fonctionnement du détenteur piloté 17, et d'autre part du surpresseur 12 de façon à ce que les conditions de fonctionnement du circuit soient telles que la teneur en oxygène du mélange gazeux qui alimente la pile en combustible soit voisine de la valeur de consigne.

Le système qui vient d'être décrit a l'avantage d'être alimenté en oxygène pur sous forte pression, ou plus généralement en gaz oxygéné à forte teneur en oxygène et qui utilise peu d'espace, tout en utilisant une membrane destinée à fonctionner en présence d'air alimentée avec un gaz comparable à de l'air de façon à conserver une durée de vie longue pour la membrane active, et d'autre part, de ne pas rejeter dans l'atmosphère de gaz neutre tel que de l'azote.

Certes de temps en temps un peu d'azote peut être rejeté dans l'atmosphère mais il est rejeté dans une quantité suffisamment faible pour que, dans un sous-marin par exemple, ce rejet puisse être absorbé par le système de régénération de l'air.

Le dispositif qui vient d'être décrit a été décrit avec une pile à combustible à membrane échangeuse de protons, mais il peut être adapté à toutes piles à combustible comportant des membranes actives destinées à fonctionner en présence d'un gaz pas trop riche en oxygène.

Ce dispositif peut être utilisé par exemple pour alimenter les auxiliaires ou assurer une propulsion d'appoint d'un sous-marin.

## Revendications

1. Pile à combustible (1) du type à membrane échangeuse de protons et conçue pour équiper un sous-marin, comportant un circuit d'alimentation (6) en gaz oxygéné de la cathode (3), relié à une source (16) de gaz oxygéné riche en oxygène et un circuit d'évacuation (7) du gaz effluent de la cathode (3),
le gaz oxygéné riche en oxygène de la source (16) étant un gaz qui contient plus de 60% d'oxygène, de préférence plus de 80% d'oxygène,
le circuit d'évacuation du gaz effluent étant prolongé jusqu'au circuit d'alimentation en gaz oxygéné en amont de la cathode par un circuit de recyclage (8), de façon à permettre l'alimentation de la cathode par un mélange gazeux contenant plus de 60% de gaz neutre,
le circuit de recyclage (8) comportant un surpresseur (12) pilotable destiné à augmenter la pression du gaz effluent ; et,
le circuit d'alimentation (6) en gaz oxygéné de la cathode (3) étant relié à la source (16) de gaz oxygéné riche en oxygène par l'intermédiaire d'un détendeur piloté (17), et dans laquelle :
- le circuit d'alimentation en gaz oxygéné (6) comporte, entre le point de jonction (9) avec le circuit de recyclage (8) du gaz effluent et l'entrée de la cathode (3), un dispositif (18) pour mesurer la teneur en oxygène du mélange gazeux alimentant la cathode de la pile à combustible ;
- la pile comporte un module de commande et de régulation (19) pour la régulation de la teneur en oxygène du mélange gazeux alimentant la cathode (3), le dispositif (18) pour mesurer la teneur en oxygène du mélange gazeux alimentant la cathode étant relié au module (19), le module (19) émettant des commandes vers le détendeur piloté (17) et vers le surpresseur (12) ; et **caractérisée en ce que**:
- le circuit de recyclage (8) comprend un moyen (13) pour faire un appoint en gaz neutre.

2. Pile selon la revendication 1, dans laquelle le module de commande et de régulation (19) reçoit une consigne de puissance (21), la régulation par le module de commande et de régulation (19) de la teneur en oxygène du mélange gazeux alimentant la cathode permettant la régulation de la puissance fournie par la pile.

3. Pile selon la revendication 2, dans laquelle la consigne de puissance (21) est envoyée au module de commande et de régulation (19) qui est propre à élaborer une consigne de teneur en oxygène, à comparer cette consigne de teneur en oxygène à la teneur en oxygène mesurée à l'aide du dispositif (18) pour mesurer la teneur en oxygène, et, en fonction de l'écart constaté, à ajuster, d'une part, les conditions de fonctionnement du détenteur piloté (17) et, d'autre part, du surpresseur (12), de façon à ce que les conditions de fonctionnement du circuit soient telles que la teneur en oxygène du mélange gazeux alimentant la cathode en combustible soit voisine de la valeur de consigne.

4. Pile selon l'une quelconque des revendications précédentes, dans laquelle la teneur en oxygène du mélange gazeux alimentant la cathode régulée par le module (19) contient entre 15 et 30% d'oxygène.

5. Pile selon l'une quelconque des revendications précédentes, dans laquelle le circuit de recyclage (8) comprend un moyen (10) pour évacuer de l'eau contenue dans le gaz effluent.

6. Pile selon l'une quelconque des revendications précédentes, dans laquelle le circuit de recyclage (8) comprend un moyen (11) pour purger au moins partiellement le circuit de gaz effluent.

7. Procédé pour alimenter en gaz oxygéné la cathode (3) d'une pile à combustible (1) conforme à l'une quelconque des revendications 1 à 6, selon lequel on mélange un gaz oxygéné riche en oxygène, qui contient plus de 60% d'oxygène, de préférence plus de 80% d'oxygène, avec un gaz effluent de la cathode de façon à constituer un mélange gazeux alimentant la cathode contenant plus de 60% de gaz neutre, et on régule la teneur en oxygène du mélange gazeux alimentant la cathode autour d'une consigne fonction de la puissance électrique que doit fournir la pile à combustible,
**caractérisé en ce que**, pour réguler la teneur en oxygène du mélange gazeux alimentant la cathode, on mesure la teneur en oxygène du mélange gazeux alimentant la cathode, et on ajuste la pression d'alimentation en oxygène et la pression du gaz effluent surpressé, en fonction de l'écart entre la mesure de la teneur en oxygène et la consigne de teneur en oxygène du mélange gazeux alimentant la cathode,
et **en ce que**, de façon discontinue, on évacue une partie du gaz effluent recyclé et on introduit du gaz neutre neuf.

8. Procédé selon la revendication 7, dans lequel on mélange le gaz riche en oxygène et avec tout le gaz effluent de la cathode.

## Patentansprüche

1. Brennstoffzelle (1) des Typs mit Protonenaustauschermembran und entwickelt, um ein Unterseeboot auszustatten, aufweisend einen Versorgungskreis (6) der Kathode (3) mit sauerstoffhaltigem Gas, verbunden mit einer Quelle (16) sauerstoffhaltigen Gases, das reich an Sauerstoff ist, und einen Ableitungskreis (7) des aus der Kathode (3) strömenden Gases,
wobei das sauerstoffhaltige Gas, das reich an Sauerstoff ist, der Quelle (16) ein Gas ist, das über 60 % Sauerstoff, vorzugsweise über 80 % Sauerstoff, enthält,
wobei der Ableitungskreis des aus der Kathode strömenden Gases bis zum Versorgungskreis mit sauerstoffhaltigem Gas vor der Kathode mittels eines Recyclingkreises (8) derart verbunden ist, dass die Versorgung der Kathode mit einem Gasgemisch, das über 60 % neutrales Gas enthält, möglich ist,
wobei der Recyclingkreis (8) einen steuerbaren Verstärker (12) aufweist, der bestimmt ist, den Druck des ausströmenden Gases zu erhöhen, und
der Versorgungskreis (6) der Kathode (3) mit sauerstoffhaltigem Gas mit der Quelle (16) sauerstoffhaltigen Gases, das reich an Sauerstoff ist, über einem gesteuerten Druckregler (17) verbunden ist,
und wobei
- der Versorgungskreis mit sauerstoffhaltigem Gas (6) zwischen dem Verbindungspunkt (9) mit dem Recyclingkreis (8) des ausströmenden Gases und dem Eingang der Kathode (3) eine Vorrichtung (18) aufweist, um den Sauerstoffgehalt des Gasgemischs zu messen, das die Kathode der Brennstoffzelle versorgt,
- die Zelle ein Steuer- und Regelmodul (19) für die Regulierung des Sauerstoffgehalts des Gasgemischs aufweist, welches die Kathode (3) versorgt, wobei die Vorrichtung (18) zur Messung des Sauerstoffgehalts des Gasgemischs, welche die Kathode versorgt, mit dem Modul (19) verbunden ist, wobei das Modul (19) Befehle an den gesteuerten Druckregler (17) und an den Verstärker (12) sendet, und **dadurch gekennzeichnet, dass**:
- der Recyclingkreis (8) ein Mittel (13) aufweist, um einen Ausgleich mit neutralem Gas herzustellen.

2. Zelle nach Anspruch 1, wobei das Steuer- und Regelmodul (19) einen Leistungssollwert (21) empfängt, wobei die Regulierung des Sauerstoffgehalts des Gasgemischs, welches die Kathode versorgt, durch das Steuer- und Regelmodul (19) die Regulierung der von der Zelle bereitgestellten Leistung ermöglicht.

3. Zelle nach Anspruch 2, wobei der Leistungssollwert (21) an das Steuer- und Regelmodul (19) gesendet wird, das imstande ist, einen Sollwert des Sauerstoffgehalts zu ermitteln, diesen Sollwert des Sauerstoffgehalts mit dem mit der Vorrichtung (18) zur Messung des Sauerstoffgehalts gemessenen Sauerstoffgehalt zu vergleichen und in Abhängigkeit von der ermittelten Differenz zum einen die Funktionsbedingungen des gesteuerten Druckreglers (17) und zum anderen des Verstärkers (12) derart anzupassen, dass die Funktionsbedingungen des Kreises derart sind, dass der Sauerstoffgehalt des Gasgemischs, welches die Kathode mit Brennstoff versorgt, etwa dem Sollwert entspricht.

4. Zelle nach einem der vorangehenden Ansprüche, wobei der Sauerstoffgehalt des Gasgemischs, welches die von dem Modul (19) geregelte Kathode versorgt, zwischen 15 und 30 % Sauerstoff enthält.

5. Zelle nach einem der vorangehenden Ansprüche, wobei der Recyclingkreis (8) ein Mittel (10) zur Ableitung des Wassers umfasst, das in dem ausströmenden Gas enthalten ist.

6. Zelle nach einem der vorangehenden Ansprüche, wobei der Recyclingkreis (8) ein Mittel (11) umfasst, um das ausströmende Gases mindestens teilweise aus dem Kreis abzulassen.

7. Verfahren zur Versorgung der Kathode (3) einer Brennstoffzelle (1) nach einem der Ansprüche 1 bis 6 mit sauerstoffhaltigem Gas, wobei ein Gemisch eines Gases, das reich an Sauerstoff ist, das über 60 % Sauerstoff, vorzugsweise über 80 % Sauerstoff, enthält, mit einem aus der Kathode ausströmenden Gas derart gemischt wird, dass ein Gasgemisch gebildet wird, welches die Kathode versorgt, das über 60 % neutrales Gas enthält, und der Sauerstoffgehalt des Gasgemischs, welches die Kathode versorgt, ungefähr auf einen Sollwert reguliert wird, der von der elektrischen Leistung abhängt, welche die Brennstoffzelle bereitstellen muss,
**dadurch gekennzeichnet, dass**, um den Sauerstoffgehalt des Gasgemischs zu regulieren, welches die Kathode versorgt, der Sauerstoffgehalt des Gasgemischs, welches die Kathode versorgt, gemessen wird, und der Versorgungsdruck mit Sauerstoff und der Druck des ausströmenden verdichteten Gases in Abhängigkeit von der Differenz zwischen dem Messwert des Sauerstoffgehalts und dem Sollwert des Sauerstoffgehalts des Gasgemischs, welches die Kathode versorgt, angepasst wird,
und dass diskontinuierlich ein Teil des recycelten ausströmenden Gases abgeleitet und neues neutrales Gas eingeleitet wird.

8. Verfahren nach Anspruch 7, wobei das Gas, das reich an Sauerstoff ist, und mit dem gesamten Gas, das aus der Kathode strömt, gemischt wird.

## Claims

1. Proton exchange membrane fuel cell (1) designed to equip a submarine, comprising a circuit (6) for supplying oxygenated gas to the cathode (3), connected to a source (16) of oxygenated gas rich in oxygen, and a circuit (7) for discharging the effluent gas from the cathode (3),
the oxygenated gas rich in oxygen of the source (16) being a gas which contains more than 60% of oxygen, preferably more than 80% of oxygen,
the circuit for discharging the effluent gas being extended to the circuit for supplying oxygenated gas upstream of the cathode by a recycling circuit (8), so as to allow the cathode to be supplied with a gas mixture containing more than 60% of neutral gas,
the recycling circuit (8) having a controllable booster (12) for increasing the pressure of the effluent gas; and,
the circuit (6) for supplying oxygenated gas to the cathode (3) being connected to the source (16) of oxygenated gas rich in oxygen via a controlled pressure regulator (17),
and wherein :
- the circuit (6) for supplying oxygenated gas comprises, between the junction point (9) with the effluent gas recycling circuit (8) and the inlet of the cathode (3), a device (18) for measuring the oxygen content of the gas mixture feeding the cathode of the fuel cell;
- the cell comprises a control and regulation module (19) for regulating the oxygen content of the gas mixture feeding the cathode (3), the device (18) for measuring the oxygen content of the gas mixture feeding the cathode being connected to the module (19), the module (19) emitting commands to the controlled pressure regulator (17) and to the booster (12);
and **characterized in that**:
- the recycling circuit (8) includes a means (13) for refilling of neutral gas.

2. Fuel cell according to claim 1, in which the control and regulation module (19) receives a power setpoint (21), the regulation by the control and regulation module (19) of the oxygen content of the gas mixture feeding the cathode enabling the regulation of the power delivered by the cell.

3. Fuel cell according to claim 2, in which the power set point (21) is sent to the control and regulation module (19) which is adapted to elaborate an oxygen content set point, to compare this oxygen content set point to the oxygen content measured using the device (18) to measuring the oxygen content, and, based on the difference found, to adjust, the operating conditions of the controlled pressure regulator (17) on the one hand, and of the booster (12) on the other hand, so that the operating conditions of the circuit are such that the oxygen content of the gas mixture feeding the cathode with fuel are close to the set point value.

4. Fuel cell according to any one of the previous claims, wherein the oxygen content of the gas mixture feeding the cathode regulated by the module (19) contains between 15 and 30% of oxygen.

5. Fuel cell according to any one of the previous claims, wherein the recycling circuit (8) comprises means (10) for discharging water contained in the effluent gas.

6. Fuel cell according to any one of the previous claims, wherein the recycling circuit (8) comprises means (11) for at least partially bleeding the effluent gas circuit.

7. Method for supplying oxygen gas to the cathode (3) of a fuel cell (1) according to any one of claims 1 to 6, according to which an oxygen gas rich in oxygen, which contains more than 60% of oxygen, preferably more than 80% of oxygen, is mixed with an effluent gas from the cathode so as to form a gas mixture feeding the cathode containing more than 60% of neutral gas, and the oxygen content of the gas mixture feeding the cathode is regulated around a set point depending on the electrical power to be supplied by the fuel cell,
**characterized in that**, in order to regulate the oxygen content of the gas mixture feeding the cathode, the oxygen content of the gas mixture feeding the cathode is measured, and the oxygen supply pressure and the pressure of the high-pressure effluent gas are adjusted as a function of the difference between the measurement of the oxygen content and the oxygen content set point of the gas mixture feeding the cathode,
and **in that**, in a discontinuous manner, a part of the recycled effluent gas is discharged and new neutral gas is introduced.

8. Method according to claim 7, in which the gas rich in oxygen is mixed with all the effluent gas of the cathode.
